# EUROPÄISCHE PATENTSCHRIFT

(11) **EP 0 911 949 B1**
(45) Veröffentlichungstag und Bekanntmachung des Hinweises auf die Patenterteilung: **22.09.2004**
(21) Anmeldenummer: 98111309.5
(22) Anmeldetag: 19.06.1998
(51) Int. Cl.: H02K 11/00, E05F 15/16

(54) **Einschubmodul für einen elektromotorischen Fensterheber**
Card module for an electric motor driven window lifting mechanism
Carte modulaire pour lève-vitre électrique

(30) Priorität: 22.10.1997 DE 19746518
(43) Veröffentlichungstag der Anmeldung: 28.04.1999
(73) Patentinhaber: ROBERT BOSCH GMBH, 70442 Stuttgart (DE)
(72) Erfinder: Riehl, Guenther, 77830 Buehlertal (DE); Hager, Martin, 77830 Buehlertal (DE)

(56) Entgegenhaltungen:
- EP-A- 0 688 088
- WO-A-97/16883
- DE-A- 4 242 641
- DE-A- 4 337 390

## Beschreibung

### Stand der Technik

Die Erfindung betrifft ein Einschubmodul für einen elektromotorischen Fensterheber, der vorzugsweise in einem Kraftfahrzeug eingesetzt wird.

Bei einem bekannten elektromotorischen Fensterheber ist ein Einschubmodul für eine Steuer- und Regelelektronik zur Anbringung an einem Getriebegehäuse des Fensterhebers vorgesehen. Das Einschubmodul weist ein Kunststoffteil auf, das einen Stecker für die Übertragung von Signalströmen und Motorkontakte für die Übertragung von Leistungsströmen trägt. Das Kunststoffteil ist mechanisch und elektrisch mit einer Leiterplatte des Einschubmoduls verbunden. Die Leiterplatte mit dem Kunststoffteil wird in ein Gehäuse des Einschubmoduls eingefügt und danach im Bereich des Steckers mit Gießharz abgedichtet.

Die Art der Herstellung des Einschubmoduls ist aufgrund der vielen Montageschritte fertigungstechnisch ungünstig und kostenintensiv.

### Vorteile der Erfindung

Das erfindungsgemäße Einschubmodul für einen elektromotorischen Fensterheber mit den kennzeichnenden Merkmalen des Anspruchs 1 hat demgegenüber den Vorteil, daß die zuvor erwähnte Unzulänglichkeit in zufriedenstellendem Maße vermieden wird. Dazu wird das Einschubmodul mit einem Stecker gebildet, der aus einem Steckergehäuse mit eingespritzten Steckerkontakten besteht, wobei in dem Kunststoffgehäuse eine Dichtung zur Abdichtung des Steckers im Getriebegehäuse, die Motorkontakte zur Übertragung der Leistungsströme und eine Aufnahme für ein Trägerelement für Elektronikbauelemente integriert ist, das kontaktierend einsetzbar ist.

Damit enthält der Stecker alle zusätzlichen Bauteile des Einschubmoduls, wodurch die Montageschritte für das Einschubmodul reduziert sind und eine kostengünstige Fertigung des Einschubmoduls ermöglicht ist.

In den Unteransprüchen sind vorteilhafte Maßnahmen für die Realisierung der Erfindung angegeben.

### Zeichnung

Ein Ausführungsbeispiel der Erfindung ist in der Zeichnung dargestellt und in der Figurenbeschreibung näher erläutert. Jeweils in perspektivischer Darstellung ist das Einschubmodul in der Figur 1 in einer Vorderansicht, in der Figur 2 in einer Rückansicht ohne und in der Figur 3 mit Elektronikbauelemente sowie in der Figur 4 in einer Seitenansicht gezeigt.

### Beschreibung des Ausführungsbeispiels

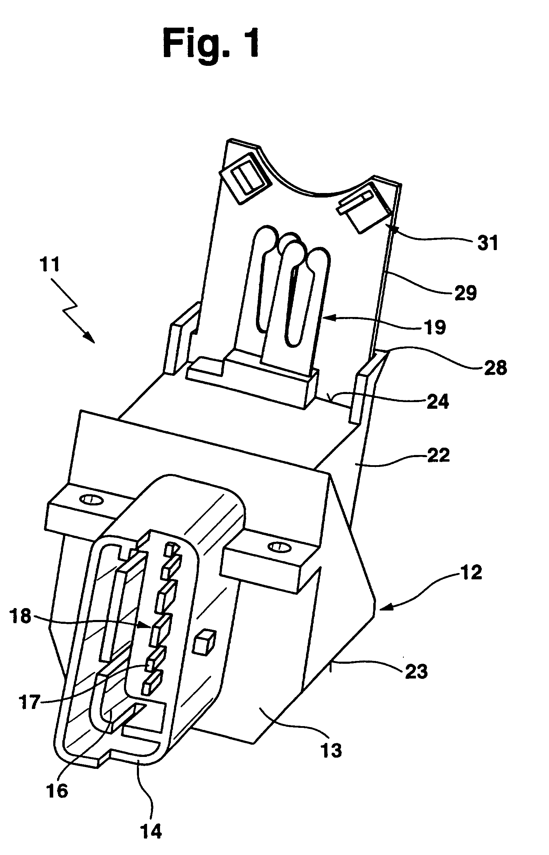

Ein erfindungsgemäßes Einschubmodul für einen elektromotorischen Fensterheber nach Figur 1 enthält als Hauptbestandteil einen Stecker 11. Der Stecker 11 weist ein pultförmiges, teilweise offenstehendes einteiliges Steckergehäuse 12 aus Kunststoff auf. Aus einer planen Vorderwand 13 des Steckergehäuses 12 ragt lotrecht zu dieser ein umlaufend geschlossener dünnwandiger Bund 14.

Der Bund 14 begrenzt einen innenliegenden Aufnahmeschacht 16, in dem reihenförmig Kontaktabschnitte 17 angeordnet sind. Die Kontaktabschnitte 17 sind freiliegende Endabschnitte von Kontaktelementen 18 und Motorkontakten 19, die in dem Steckergehäuse 12 partiell eingespritzt sind. Der Bund 14 bildet einen mechanischen Schutzwall für die Kontaktabschnitte 17 und dient als Führungselement für einen nicht mehr dargestellten Gegenstecker, dessen Aufsteckweg auf den Bund 14 durch die Vorderwand 13 begrenzt wird.

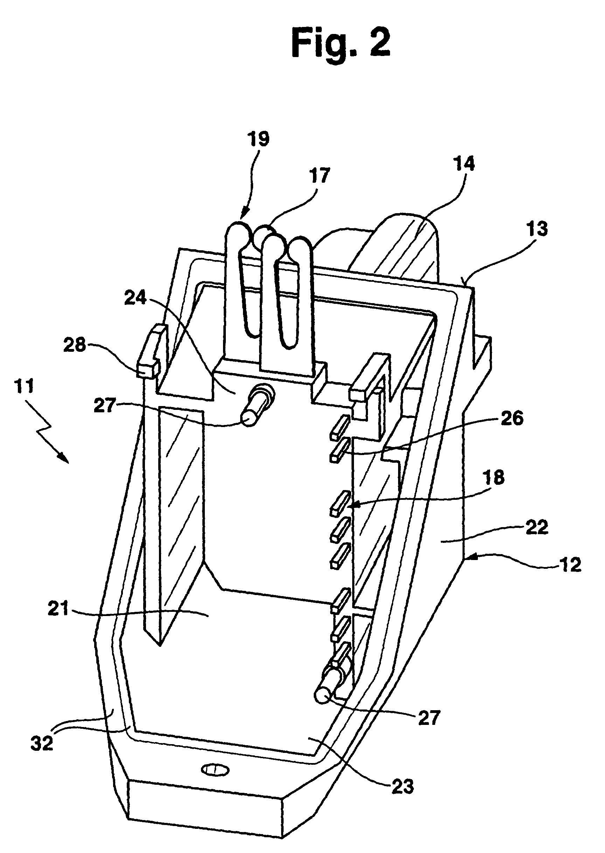

Wie in den Figuren 2 bis 4 dargestellt und insbesondere aus der Figur 2 ersichtlich, weist das Steckergehäuse 12 auf der dem Bund 14 abgewandten Seite der Vorderwand 13 einen teilweise offenliegenden Aufnahmeraum 21 auf, der seitlich von zueinander parallelen Seitenwänden 22 begrenzt wird, die anfangs von einem Boden 23 des Steckergehäuses 12 aus rampenförmig ansteigen und am Ende an der Vorderwand 13 deren vertikale Erstreckung erreichen.

Aus dem Aufnahmeraum 21 tritt eine zur Vorderwand 13 parallel angeordnete Rückwand 24 heraus, aus der freiliegende stiftförmige Anschlußabschnitte 26 der Kontaktelemente 18 und der Motorkontakte 19 in reihenförmiger Anordnung sowie, davon abgesetzt, bolzenförmige Zentrierstifte 27 ragen. Des weiteren stehen von der Rückwand 24 galgenförmig Befestigungshaken 28 ab.

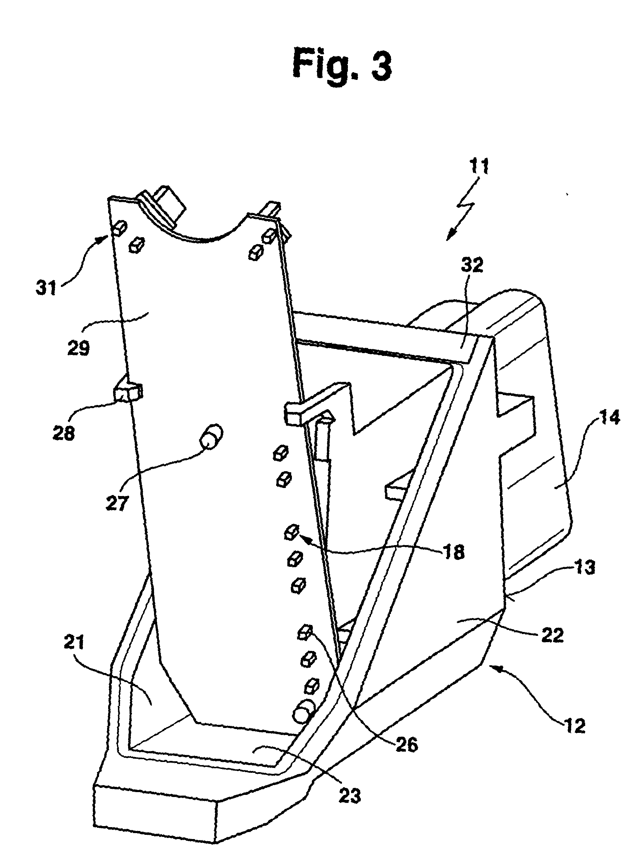

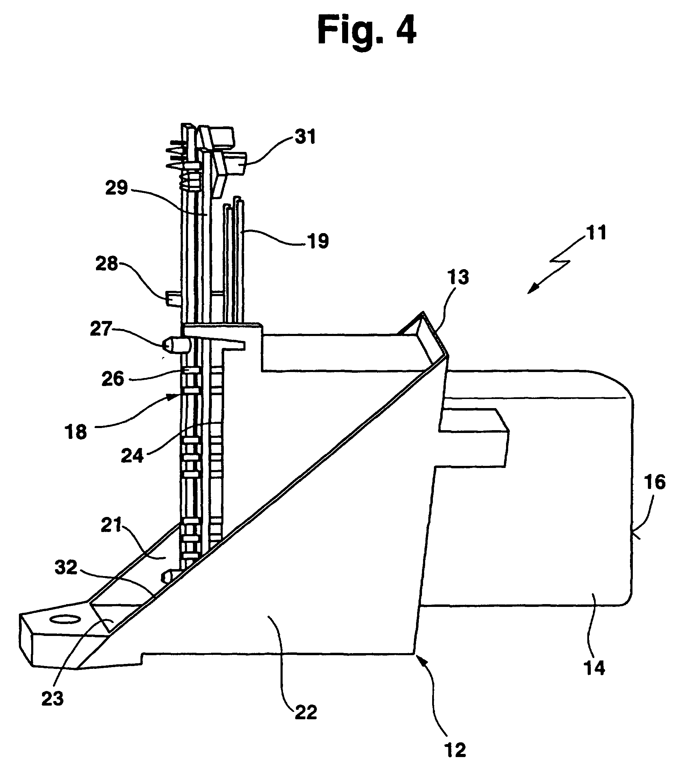

Mit Hilfe der Befestigungshaken 28 und der Zentrierstifte 27 ist, wie in Figur 3 dargestellt, eine Leiterplatte 29 als Trägerelement für Elektronikbauelemente 31, die Teile einer Steuer- und Regelelektronik des Fensterhebers bilden und beispielsweise einen Hallsensor umfassen, in der Weise an der Rückwand 24 befestigbar, daß dabei die Anschlußabschnitte 26 der Kontaktelemente 18 elektrisch kontaktierend durch zugeordnete Kontaktöffnungen der Leiterplatte 29 treten, während die Anschlußabschnitte 26 der Motorkontakte 19 freiliegend parallel zur Leiterplatte 29 verlaufen, wie aus der Figur 4 ersichtlich ist.

Der Stecker 11 mit dem so ausgebildeten und bestückten Steckergehäuse 12 wird als Einschubmodul an einem nicht mehr dargestellten Getriebegehäuse des Fensterhebers angebracht, wobei die freiliegenden zungenförmigen Kontaktabschnitte 17 der Motorkontakte 19 rückfedernd gegen zugeordnete Kontaktstellen des Getriebemotors geführt sind.

Zum Schutz vor Verschmutzung ist an den begrenzenden Stirnflächen des Aufnahmeraumes 21 umlaufend eine Dichtung 32 obenliegend angebracht, die beim Zusammenführen des Steckers 11 mit dem Getriebegehäuse an diesem kraftschlüssig anliegt.

Durch die Integration aller Bauteile des Einschubmoduls am Stecker 11 kann dieses durch die dadurch mögliche Reduzierung der Montageschritte kostengünstig gefertigt werden.

## Patentansprüche

1. Einschubmodul für einen elektromotorischen Fensterheber, insbesondere zum Einsatz in einem Kraftfahrzeug, welches Einschubmodul an einem Getriebegehäuse des Fensterhebers angebracht ist, das einen Stecker (11) sowie Elektronikbauelemente (31) aufweist, **dadurch gekennzeichnet, daß** der Stecker (11) ein Steckergehäuse (12) au Kunststoff mit partiell eingespritzten Kontaktelementen (18) und Motorkontakten (19) aufweist, wobei in dem Steckergehäuse (12) eine Dichtung (32) zur Abdichtung des Steckers (11) am Getriebegehäuse und eine Aufnahme (27, 28) für wenigstens ein Trägerelement (29) für Elektronikbauelemente (31) integriert ist und in die Aufnahme (27, 28) das Trägerelement (29) kontaktierend zur Bildung des Einschubmoduls eingesetzt wird.

2. Einschubmodul nach Anspruch 1, **dadurch gekennzeichnet, daß** das Steckergehäuse (12) einteilig ist und an einer Vorderwand (13) einen Aufnahmeschacht (16) mit Kontaktabschnitten (17) der Kontaktelemente (18) und der Motorkontakte (19) aufweist.

3. Einschubmodul nach Anspruch 2, **dadurch gekennzeichnet, daß** das Steckergehäuse (12) auf der dem Aufnahmeschacht (16) abgewandten Seite einen Aufnahmeraum (21) aufweist, aus dem eine Rückwand (24) heraustritt, von der Anschlußabschnitte (26) der Kontaktelemente (18) und der Motorkontakte (19) sowie die Aufnahme (27, 28) für das Trägerelement (29) der Elektronikbauelemente (31) abstehen.

4. Einschubmodul nach Anspruch 3, **dadurch gekennzeichnet, daß** das Trägerelement eine Leiterplatte (29) ist, die beim Einfügen in die Aufnahme (27, 28) mit den Anschlußabschnitten (26) der Kontaktelemente (18) und der Motorkontakte (19) elektrisch kontaktiert.

5. Einschubmodul nach Anspruch 4, **dadurch gekennzeichnet, daß** an begrenzten Stirnflächen des Aufnahmeraumes (21) umlaufend die Dichtung (32) obenliegend angebracht ist.

## Claims

1. Push-in module for an electromotive window lifter, in particular for use in a motor vehicle, which push-in module is mounted on a gearcase of the window lifter, said gearcase having a plug (11) and electronic components (31), **characterized in that** the plug (11) has a plug housing (12) made from plastic, with partially injected contact elements (18) and with motor contacts (19), the plug housing (12) having integrated in it a seal (32) for sealing off the plug (11) on the gearcase and a receptacle (27, 28) for at least one carrier element (29) for electronic components (31), and the carrier element (29) being inserted into the receptacle (27, 28) in a contacting manner in order to form the push-in module.

2. Push-in module according to Claim 1, **characterized in that** the plug housing (12) is in one part and on a front wall (13) has a receiving well (16) with contact portions (17) of the contact elements (18) and of the motor contacts (19).

3. Push-in module according to Claim 2, **characterized in that** the plug housing (12) has, on the side facing away from the receiving well (16), a receiving space (21), out of which emerges a rear wall (24), from which connecting portions (26) of the contact elements (18) and of the motor contacts (19) and also the receptacle (27, 28) for the carrier element (29) of the electronic components (31) project.

4. Push-in module according to Claim 3, **characterized in that** the carrier element is a circuit board (29) which, when being inserted into the receptacle (27, 28), contacts electrically the connecting portions (26) of the contact elements (18) and of the motor contacts (19).

5. Push-in module according to Claim 4, **characterized in that** the seal (32) is peripherally attached on top to delimited end faces of the receiving space (21).

## Revendications

1. Module d'insertion pour un lève-vitres à moteur électrique, en particulier destiné à être utilisé dans un véhicule automobile, ledit module d'insertion étant monté dans un boîtier de mécanisme d'actionnement du lève-vitre, qui présente une fiche (11) ainsi que des composants électroniques (31),
**caractérisé en ce que**
la fiche (11) présente un boîtier de fiche (12) en matière plastique avec des éléments de contact (18) et des contacts moteur (19) partiellement insérés, le boîtier de fiche (12) comportant un joint d'étanchéité (32) pour isoler la fiche (11) au niveau du boîtier de mécanisme d'actionnement et un logement (27, 28) pour au moins un élément support (29) pour des composants électroniques (31), et l'élément support (29) est monté dans le logement (27, 28) en établissant un contact afin de former le module d'insertion.

2. Module d'insertion selon la revendication 1,
**caractérisé en ce que**
le boîtier de fiche (12) est fait d'une seule pièce et présente au niveau d'une paroi avant (33) un compartiment de réception (16) doté de parties de contact (17) des éléments de contact (18) et des contacts moteur (19).

3. Module d'insertion selon la revendication 2,
**caractérisé en ce que**
le boîtier de fiche (12) présente sur le côté opposé au compartiment de réception (16) un espace de réception (21), duquel sort une paroi arrière (24) à partir de laquelle s'étendent des parties de connexion (26) des éléments de contact (18) et des contacts moteur (19) ainsi que le logement (27, 28) pour l'élément support (29) des composants électroniques (31).

4. Module d'insertion selon la revendication 3,
**caractérisé en ce que**
l'élément support est une plaquette de circuit intégré (29) qui, lorsqu'elle est insérée dans le logement (27, 28), établit un contact électrique avec les parties de connexion (26) des éléments de contact (18) et des contacts moteur (19).

5. Module d'insertion selon la revendication 4,
**caractérisé en ce que**
le joint d'étanchéité (32) entoure par le dessus les surfaces avant de l'espace de réception (21).
